# EUROPÄISCHE PATENTSCHRIFT

(11) **EP 0 460 585 B1**
(45) Veröffentlichungstag und Bekanntmachung des Hinweises auf die Patenterteilung: **22.12.1993**
(21) Anmeldenummer: 91109065.2
(22) Anmeldetag: 04.06.1991
(51) Int. Cl.: B62J 6/00

(54) **Fahrradlichtanlage mit Dynamo**
Bicycle lighting equipment with dynamo
Installation d'éclairage avec dynamo pour bicyclette

(30) Priorität: 07.06.1990 CH 1913/90
(43) Veröffentlichungstag der Anmeldung: 11.12.1991
(73) Patentinhaber: BISY Bike Systems Industrielle Fertigung von Fahrradteilen GmbH, D-76473 Iffezheim (DE)
(72) Erfinder: Schwaller, Edwin, CH-5024 Küttigen (CH)
(74) Vertreter: Lemcke, Rupert, Dipl.-Ing.

(56) Entgegenhaltungen:
- EP-A- 0 141 455
- WO-A-81/01274
- WO-A-81/01349
- WO-A-89/07856
- CH-A- 150 507
- DE-A- 2 519 837
- GB-A- 2 050 088
- GB-A- 2 161 040
- WIRELESS WORLD, Band 84, Nr. 1510, Juni 1978, Seite 65, Haywards Heath, GB; "Standby battery for dynamo lighting"

## Beschreibung

Die Erfindung betrifft eine Fahrradlichtanlage gemäss dem Oberbegriff des ersten Patentanspruchs.

Solche Anlagen sind in vielfacher Ausführung, insbesondere auch als Standlichtanlagen bekannt geworden. Es sei hierzu auf die DE-A 31 14 767 und die DE-A 31 06 569, sowie auf WO-A 8907856 verwiesen. Bekannt ist daraus bereits das Problem stark schwankender Speisespannungen und entsprechend geringer, bzw. schwankender Lichtausbeute der damit betriebenen Glühlampen. Zur Abhilfe wurden elektronische Spannungs- und Strombegrenzungseinrichtungen in Form von Zenerdioden vorgeschlagen, mit denen schädliche Spannungspitzen von der Glühlampe ferngehalten werden. Anderseits war bei Batteriespeisung vorgesehen, beim Abfallen der Spannung zusätzliche Batterien zuzuschalten. Bei diesen vorbekannten Anlagen war es nötig, die Spannung auf dem tieferen Niveau der Batteriespannung zu begrenzen, wobei bei höheren Spannungen elektrische Leistung ungenützt blieb, bzw. vernichtet wurde. Dies ist ineffizient, insbesondere wenn die Fahrradlichtanlage auch mit wiederaufladbaren Batterien soll betrieben werden können.

In der GB-A 2 161 040 wird eine Anlage beschrieben, bei welcher die Lampe entweder von einem Dynamo oder von einer wiederaufladbaren Batterie gespiesen wird. Hier bietet sich jedoch das Problem, dass die Batterie im Fahrbetrieb ständig geladen wird, was in vielen Fahrsituationen, insbesondere bei mittleren Geschwindigkeiten, zu einer grossen Belastung des Dynamos und einer unerwünschten Bremsung des Fahrrads führt.

Es ist deshalb ein Ziel der Erfindung, eine Fahrradlichtanlage zu schaffen, bei welcher lampenschonend unter jeder Betriebsbedingung eine optimale Lichtausbeute bei allen Geschwindigkeiten mit einem minimalen Dynamowiderstand und optimalen Ladebedingungen verbunden werden kann, so dass sich die Batterielebensdauer erhöhen lässt.

Ferner ist es ein Ziel der Erfindung, die Fahrradlichtanlage basierend auf derselben Grundschaltung in verschiedenen Ausbaustufen ausbilden zu können, welche mit bestehenden Anlageteilen kompatibel sind, so dass auch bestehende Fahrräder damit nachrüstbar sind.

Schliesslich ist es ein Ziel der Erfindung, eine Lichtanlage zu schaffen, bei der kleine Eigenverluste auftreten und die so geschaltet sein kann, dass sie ständig mitläuft, ohne den Fahrwiderstand wesentlich zu beeinflussen. Diese Aufgaben werden mittels der Merkmale gemäss den Patentansprüchen gelöst.

Die Verwendung eines Dynamos mit nahezu linearer Kennlinie, in Kombination mit einem die Spannung stabilisierenden Schaltregler, erlaubt einen besonders effizienten Betrieb der Fahrrad-Lichtanlage, sei es in Verbindung mit einer wiederaufladbaren Batterie oder ohne eine solche.

Durch die Stabilisierung der Spannung auf einem vorgegebenen, dem Nennwert der Lampen entsprechenden Niveau, wird die Ueberschussleistung nicht vernichtet, sondern entweder überhaupt nicht aus dem Dynamo bezogen oder gegebenenfalls zum Laden von Batterien verwendet. Dementsprechend wird nicht nur die Spannung, sondern auch der Drehwiderstand des Dynamos auf einem optimalen Wert stabilisiert.

Die Dynamoausgangsspannung wird mittels eines Schwellenwertschalters gemessen und in mindestens drei Schaltzustände der Anlage umgesetzt, welche der jeweils erzeugten Spannung optimal angepasst sind.

Der Dynamo kann als ständig mitlaufender Nabendynamo ausgebildet sein. Die damit erzeugte Leistung reicht bei optimaler Ausnutzung sowohl für Fahr- als auch Standlichtbetrieb aus.

In der höchsten Ausbaustufe wird über die Steuerlogik ein Ladegerät für die wiederaufladbaren Batterien, abhängig vom jeweiligen Fahr- und Betriebszustand des Fahrrades, in unterschiedliche Ladezyklen geschaltet. Damit kann sowohl der Ladevorgang als auch der Betriebszustand der Leuchten dem Fahrzustand optimal angepasst werden, so dass bei normalem, zyklischen Fahrverhalten immer sowohl Fahrlicht als auch Standlicht nach den gesetzlichen Normen gewährleistet ist.

Nachfolgend werden anhand der Zeichnungen Ausführungsbeispiele der erfindungsgemässen Anordnungen näher beschrieben. Darin zeigen:
Fig. 1 eine Grundschaltung für eine erste Anordnung, wobei strichliert eine zweite Ausbaustufe eingezeichnet ist,
Fig. 2 eine schematische Darstellung der Schaltung des Schaltreglers von Fig. 1,
Fig. 3 ein Diagramm der Arbeitsweise des Schaltreglers von Fig. 2,
Fig. 4 eine Schaltung für eine zweite Anordnung mit nur einer Lampe in der Vorderleuchte und wiederaufladbaren Batterien,
Fig. 5 ein Blockschema eines Teils der Schaltung gemäss Fig. 4, zur Darstellung der Laderegelung,
Fig. 6 ein Diagramm der Schaltzustände in Abhängigkeit der Geschwindigkeit,
Fig. 7 ein Spannungs-Geschwindigkeits-Diagramm gemäss Figur 6,
Fig. 8 ein Spannungs-Zeit-Diagramm der Schaltung gemäss den Figuren 4 und 5 für einen Fahrzyklus,
Fig. 9 ein Blockschema einer dritten Anordnung gemäss Figur 4, jedoch mit zwei unterschiedlichen Lampen in der Vorderleuchte und weiteren Elementen, wie Bremslicht
Fig. 10 ein Blockschema einer zusätzlichen Anzeigeeinrichtung,
Fig. 11 eine Zusammenstellung der Komponenten einer vollständig ausgebauten Anlage;
Fig. 12 ein entsprechend ausgerüstetes Fahrrad, und
Fig. 13 ein Fahrrad, bei welchem die Anlage mit herkömmlichen Leuchten und Dynamo kombiniert ist.

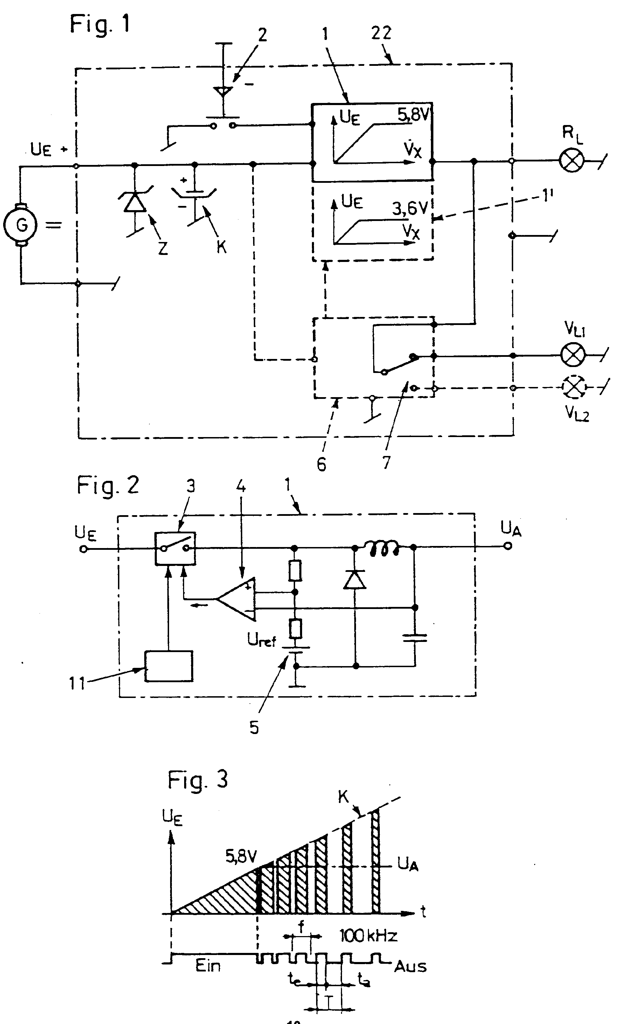

Zunächst soll anhand der Figuren 1 bis 3 die Funktionsweise einer Grundschaltung der Lichtanlage erläutert werden. Diese Grundschaltung stellt zugleich eine erste Ausbaustufe der Anlage dar.

Die Lichtanlage besitzt einen Generator G, der als Fahrraddynamo ausgebildet ist, wie noch näher erläutert wird. Dieser liefert nach entsprechender Gleichrichtung eine Gleichspannung U_{E}, bzw. einen Gleichstrom, deren Grösse mit der Fahrgeschwindigkeit zunimmt. Mittels einem Kondensator K am Ausgang kann die Ausgangsspannung U_{E} zusätzlich geglättet und mit einer Zenerdiode die Elektronik vor Ueberspannung geschützt werden.

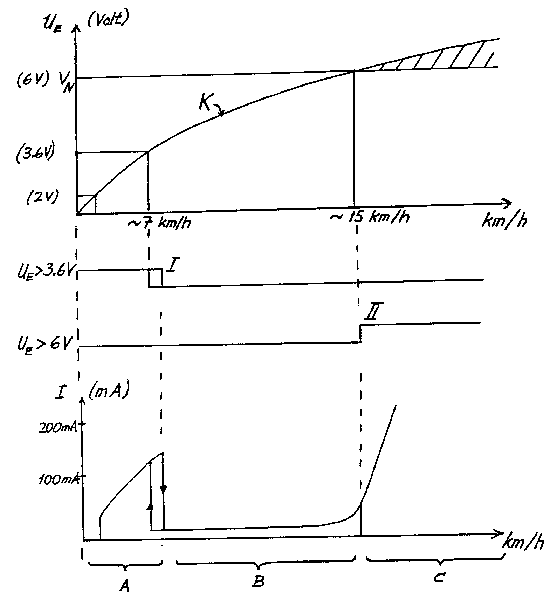

Die Spannungs-Geschwindigkeits-Kennlinie K des verwendeteten Dynamos (vergl. Fig. 6) bewirkt, dass bei höheren Fahrgeschwindigkeiten Ueberspannungen erzeugt werden, welche die Fahrradlampen zerstören würden, und die den gesetzlichen Normen nicht entsprächen.

Erfindungsgemäss kann aber gerade die Erzeugung von Ueberspannungen für einen effizienten Betrieb der Lichtanlage ausgenutzt werden. Hierzu wird zwischen dem Dynamo G und den Lampen R_{L} (Rücklicht) und V_{L1}, bzw. V_{L2} (Vorderlicht) ein Schaltregler 1 angeordnet, der über einen Schalter 2 ein- und ausgeschaltet werden kann. Ist er ausgeschaltet, wirkt der Schaltregler 1 wie ein offener Schalter und die Lampen sind nicht am Dynamo G angeschlossen. Ist er eingeschaltet, so stabilisiert er die Spannung beinahe verlustfrei auf einem wählbaren Wert.

Anhand der Figuren 2 und 3 soll beispielshalber die Funktionsweise eines solchen Schaltreglers erläutert werden.

Bis zu einer gewünschten Ausgangsspannung U_{A} (von im vorliegenden Beispiel 5.8 V) ist ein elektronischer Schalter 3 ständig geschlossen. Die Dynamospannung kann in diesem Bereich verlustlos zunehmen bis die gewünschte Ausgangsspannung U_{A} erreicht ist. Nimmt die Dynamospannung weiter zu (Fig. 3), so wird der elektronische Schalter durch einen Oszillator 11 in einer festgelegten Schaltfrequenz von z.B. 100 KHz geöffnet und wieder geschlossen.

In Funktion der Eingangsspannung U_{E} wird dabei das Tastverhältnis te/T verändert und zwar so, dass der Mittelwert der durchgelassenen Spannungsimpulse gerade der stabilisierten Ausgangsspannung U_{A} entspricht. Zugleich ist damit auch eine Strombegrenzung verbunden. Die Spannungsimpulse werden in einem LC-Filter zur Gleichspannung U_{A} gewandelt. Eine entsprechende Regelschaltung zur Einstellung des Tastverhältnisses mit einem Operationsverstärker 4 und einer Referenzspannungsquelle 5 ist in Fig. 2 dargestellt. Der Regelverstärker ist vorzugsweise in C-MOS-Technik aufgebaut und arbeitet mit einem Wirkungsgrad von über 90 %.

Uebersteigt die Dynamospannung U_{E} die gewünschte Ausgangsspannung U_{A}, so wird also nicht elektrische Leistung vernichtet, sondern der Dynamo wird entlastet, womit auch die elektromotorische Kraft im Dynamo und damit der Fahrwiderstand entsprechend auf einen optimalen Wert begrenzt ist. Arbeitet der Dynamo G in diesem Bereich, so leuchten die Lampen des Vorder- und Rücklichts mit konstanter Helligkeit. Die Lampennennwerte sind mit z.B. 6 V/2.5 W für das Vorderlicht und 6 V/0.6 W für das Rücklicht auf diese stabilisierte Spannung abgestimmt.

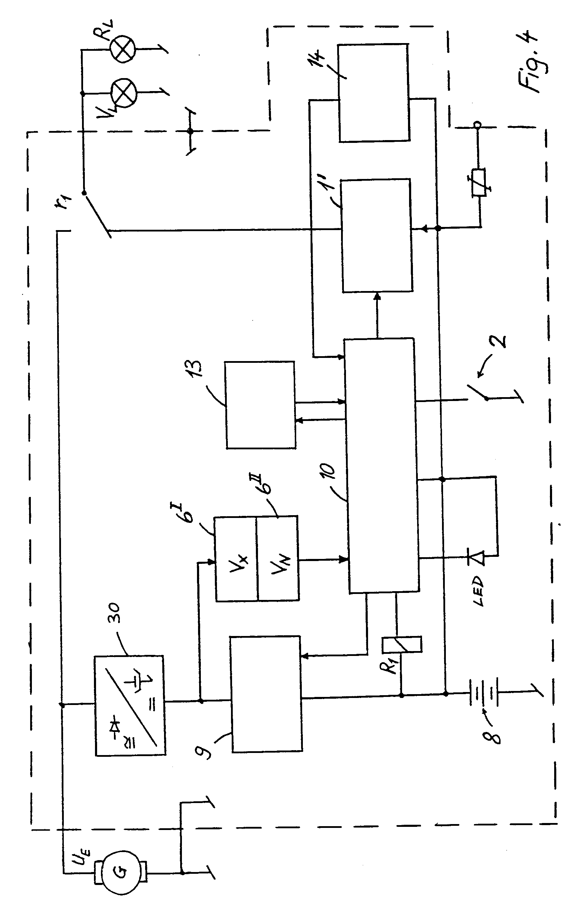

Wird die Fahrt verlangsamt, so wird in Abhängigkeit der Fahrgeschwindigkeit eine Spannung erzeugt, die zwischen 0 und 5.8 V liegt. Die Lampen leuchten je schwächer, desto mehr die Spannung unter ihre Nennspannung fällt. Es besteht damit die Gefahr zu schwachen Lichtes, umso mehr als auch die Lichtausbeute abnimmt, je stärker vom Lampennennwert abgewichen wird. Um dies zu verhindern, ist in einer zweiten Ausbaustufe der beschriebenen Anlage ferner ein Schwellenwertschalter 6 vorgesehen (vergl. Fig. 1 oder 4), der die Dynamospannung abgreift. Im strichliert ergänzten Beispiel von Figur 1 erzeugt der Schwellenwertschalter 6 zwei Zustände und die Vorderleuchte besitzt zwei Lampen (oder eine Lampe mit zwei Wendeln) mit unterschiedlichen Nennspannungen. Der Schaltregler weist zwei, diesen Nennspannungen entsprechende Stabilisierungsstufen auf. Nachfolgend werden diese beiden Stufen durch die Bezeichnung Schaltregler 1 für die erste und Schaltregler 1' für die zweite Stufe unterschieden. Befindet sich die Spannung unterhalb eines Wertes V_{X1} (= 4.5 V im Beispiel), so wird sie durch Schaltregler 1' auf 3.6 V stabilisiert und ist über einen Schalter 7 an die erste Lampe der Vorderleuchte V_{L1} mit niedriger Nennspannung (im Beispiel 3.6 V, 1 W) angeschlossen. Uebersteigt die Spannung den Wert V_{X1}, so wird sie über den Schaltregler 1 an die zweite Lampe V_{L2} angeschaltet, welche eine höhere Nennspannung (= 6, V; 2.5 W im Beispiel) besitzt. Fällt die Spannung von oben her unter einen Wert V_{X2} (4.2 V im Beispiel), so läuft der Vorgang umgekehrt ab. Eine Hysterese von ca. 0.3 V zwischen den Umschaltspannungen V_{X1} und V_{X2}, vermeidet ein dauerndes Umschalten und damit ein Flackern des Lichts, wenn die erzeugte Dynamospannung im entsprechenden Bereich schwankt.

Damit können bei Verwendung zweier Lampen für die Vorderleuchte im wesentlichen drei Betriebszustände unterschieden werden. Liegt die Dynamospannung in einem Bereich zwischen 0 und 4.5 V, so wird die Spannung auf niedrigem Niveau stabilisiert, und es wird die erste Lampe mit niedriger Nennspannung betrieben, welche in diesem Bereich eine gute Lichtausbeute sicherstellt. Uebersteigt die Dynamospannung den Wert 4.5 V, so erfolgt die Umschaltung auf die zweite Lampe (bzw. Wendel) und das höher stabilisierte Spannungsniveau. Damit wird eine Ueberspannung an den beiden Lampen verhindert, indem für beide eine Spannungsbegrenzung bei ihrer Nennspannung wirksam wird.

Im Bereich unterhalb der jeweiligen Nennspannungen werden die Lampen bei schwankender Dynamospannung aber relativ guter Lichtausbeute betrieben.

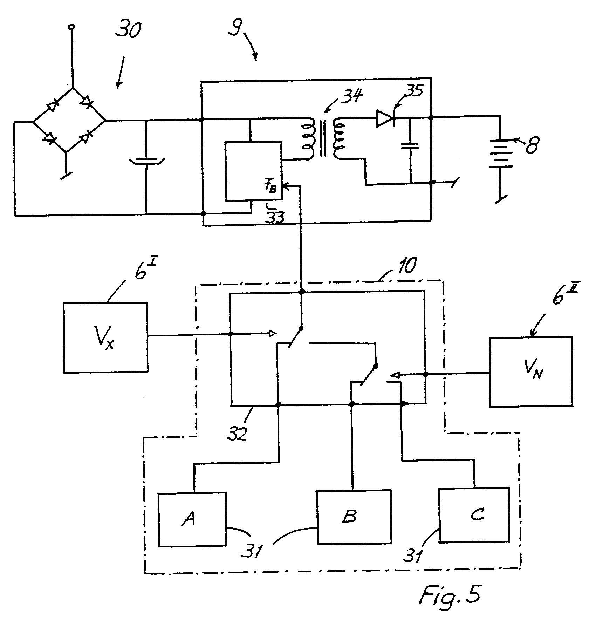

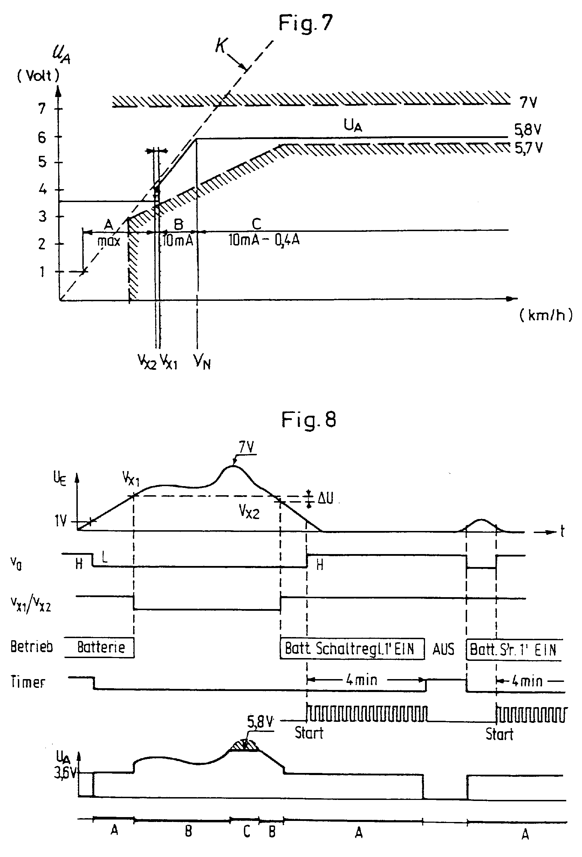

In den Figuren 4 und 8 ist eine weitere Anwendung des Schaltungsprinzips gezeigt, wobei nun die der Dynamospannung angepassten Schaltzustände nicht lampenseitig, sondern auf der Seite der Speisung bzw. der Ladesteuerung erzeugt und zur Spannungsstabilisierung, bzw. optimalen Batterieaufladung ausgenützt werden. In diesem Ausführungsbeispiel sind demzufolge speisungsseitig wiederaufladbare Batterien 8 (mit einer Nennspannung von 3.6 V) vorgesehen, die über einen Batterieladewandler 9, der in Figur 5 im Detail gezeigt ist, an den Dynamo G angeschlossen sind. Der Dynamo G besitzt eine Spannungs-Geschwindigkeits-Kennlinie K (Fig. 6, 7). Es ist verbraucherseitig eine Vorderleuchte V_{L} mit nur einer Lampe sowie eine Rückleuchte R_{L} vorgesehen, so dass diese Anlage mit herkömmlichen Fahrradleuchten betrieben werden kann.

Bei der hier gezeigten Ausführung der Lichtelektronik werden bei eingeschaltetem Licht drei Betriebszustände unterschieden, die im folgenden mit den Buchstaben A, B und C bezeichnet werden. In Fig. 6 sind diese Betriebszustände in Abhängigkeit der Fahrgeschwindigkeit des Fahrrades dargestellt. Die erste Linie in Figur 6 zeigt die Spannungs-Geschwindigkeits-Kennlinie K von Dynamo G. Die zweite Linie zeigt die Umschaltung von Betriebszustand A auf Betriebszustand B entsprechend dem logischen Signal aus einem ersten Schwellenwert-Schalters 6^{I}. Die dritte Zeile stellt das entsprechende logische Signal eines zweiten Schwellenwert-Schalters 6^{II} dar. Auf der untersten Linie schliesslich ist der Ladestrom I für die Batterie 8 gezeigt. Der Verlauf der an den Lampen auftretenden Ausgangs-Spannung U_{A} ist aus Figur 7 zu entnehmen.

Der Betriebszustand A wird bei Stillstand oder langsamer Fahrgeschwindigkeit (bis z.B. 7 km/h) eingenommen, solange die Ausgangsspannung des Dynamos G unter einem ersten Schwellenwert I von z.B. 3.6 V bleibt. Im Betriebszustand A wird die Lampenenergie aus der Batterie 8 bezogen, und die anfallende Dynamoenergie wird nach geeigneter DC/DC-Wandlung im Ladewandler 9 in die Batterie 8 geladen.

Wird der genannte Schwellenwert I bei grösserer Fahrgeschwindigkeit überschritten, so erfolgt die Umschaltung in den Betriebszustand B, solange die volle Lampenspannung noch nicht erreicht ist. In diesem Bereich arbeitet der Ladewandler 9 als Konstant-Kleinstromwandler zur Erzeugung eines konstanten Ladestroms von etwa 10 mA für die Batterie 8. Diese Belastung entspricht etwa den normalen Lampen-Widerstandstoleranzen und ist deshalb zulässig. Für die Batterie 8 ist es jedoch wichtig, dass auch sie bei der (häufigsten) Fahrgeschwindigkeit zwischen ca. 6 bis 14 km/h geladen wird.

Bei Fahrgeschwindigkeiten über ca. 15 km/h, übersteigt die Dynamospannung U_{E} die Lampen-Nennspannung von 6 V. Hier wird nun der Betriebszustand C angenommen, sobald ein Schwellenwert II von ca. 5.8 V der Dynamospannung erreicht ist. In diesem Betriebszustand wirkt die Elektronik als Spannungs-Konstanthalter, da bei einer Ueberschreitung der Lampen-Nennspannung deren Lebensdauer sehr stark abnimmt. Die überschüssige Dynamoenergie wird in die Batterie 8 geladen. Der so erreichbare Ladestrom kann bis 250 mA erreichen (Schnell-Ladung).

In Figur 4 ist ein entsprechender Schaltungsaufbau dargestellt. Der normierte Dynamo G ist über einen Gleichrichter 30 mit Siebung an die Elektronik angeschlossen. Diese besitzt einerseits einen Schwellenwert-Schalter 6 mit einem ersten Schwellenwert I der Dynamospannung U_{E} bei etwa Vₓ = 3.6 V und einem zweiten Schwellenwert II bei etwa V = 5.8 V. In den Figuren 4 und 5 ist der Schwellenwert-Schalter 6 graphisch entsprechend in zwei Blöcke aufgeteilt. Der Schwellenwert-Schalter 6 stellt die erwähnten Schwellenwerte der Dynamospannung fest und gibt entsprechende Steuersignale an eine Steuerlogik 10. Die Steuerlogik 10 besitzt drei Regelkreise 31, von denen jeder einem der erwähnten Betirebszustände zugeordnet ist, und die deshalb in Figur 5 durch entsprechende Blöcke A, B, C dargestellt sind. Je nach Betriebszustand wird einer dieser Regelkreise über eine Logik 32 mit dem Ladewandler 9 verbunden und liefert diesem entsprechende Stellsignale, wie aus Figur 5 zu entnehmen ist.

Der Ladewandler ist zwischen den Gleichrichter 30 und die Batterie 8 geschaltet und besitzt ebenfalls einen Schaltregler 33, der über einen Feedback-Eingang F_{B} die Stellsignale der Regelkreise 31 empfängt. Das entsprechend geregelte Ausgangssignal dieses Schaltreglers gelangt über einen Transformator 34 und eine Gleichrichteranordnung (vergl. Fig. 1 bis 3) als Gleichstrom in die Batterie 8, wie sich insbesondere aus Fig. 5 ergibt.

In Betriebszustand A erfolgt die Regelung der Last durch Widerstandsanpassung so, dass die in diesem Bereich anfallende Dynamoenergie optimal in die Batterie 8 geladen wird. Die Lampe bezieht dabei ihre Energie vollständig aus der Batterie, weshalb die Lampenspannung nicht unter die Batteriespannung von 3.6 V fällt. Der Regelkreis 31 A arbeitet so, dass beim Erreichen der ersten Schwellenwertspannung I die Dynamobelastung etwa der Lampenlast (von ca. 12 Ω) entspricht. Dies, um die Umschalt-Hysterese ΔU beim Umschalten in den Betriebszustand B klein zu halten, damit keine starke Lichtschwankung in den Lampen V_{L} und R_{L} auftritt.

Das Umschalten von Betriebszustand A in Betriebszustand B erfolgt mit Hysterese, wie insbesondere den Figuren 6 und 7 zu entnehmen ist. Die Hinaufschaltung von A nach B erfolgt bei einer etwas höheren Spannung Vₓ₁, als das Zurückschalten von B nach A bei der tieferen Spannung Vₓ₂. Damit kann ein ständiges Umschalten in diesem Fahrbereich und ein Flackern des Lichts verhindert werden.

Im Betriebszustand B bezieht die Lampe den Strom aus dem Dynamo (Fig. 7). Bis die volle Lampenspannung erreicht ist, sollte sie nicht zu stark zusätzlich belastet werden durch die Batterieaufladung. Dennoch ist es für die Energiebilanz wichtig, dass auch in diesem häufigen Fahrbereich eine Ladung erfolgt. Wie bereits erläutert, wird der Schaltregler 33 deshalb über den Regelkreis B so geregelt, dass ein kleiner konstanter Ladestrom von z.B. 10 mA erzeugt wird. Da dies lediglich etwa den normalen Lampen-Widerstandstoleranzen entspricht, wird die Lichtausbeute dadurch nicht merklich beeinträchtigt.

Wird bei Fahrgeschwindigkeiten von etwa 15 km/h die Nennspannung der Lampen von 6 V erreicht, so schaltet der Schwellenwert-Schalter 6^{II} den Regelkreis 31 C an den Ladewandler 9. Dieser Regelkreis regelt die Dynamobelastung so, dass eine Spannung von 6 V mittels Reglerlast auf jeden Fall nicht überschritten wird. Die Ueberspannungsenergie wird in die Batterie geladen (vergl. Fig. 6 und 8). Bei Talfahrt mit hoher Geschwindigkeit kann so ein Ladestrom bis zu 250 mA erzeugt und eine Schnell-Ladung der Batterie erzielt werden.

Zwischen der Batterie 8 und den Lampen ist ein Schaltregler 1' angeordnet. Er stabilisiert die Spannung bzw. den Strom aus der Batterie 8, bzw. aus dem Ladewandler 9, der an die Lampen gelangt, auf einem Wert von z.B. 3.2 V, so dass eine der Sicherheit förderliche, konstante Lampenhelligkeit gewährleistet ist. Er wird im Betriebszustand A bei kleiner Dynamospannung aktiv.

Beim Fahren mit Dynamo und ausgeschaltetem Licht (= Laden) arbeitet die Schaltung im Betriebszustand A, d.h. die Dynamolast entspricht etwa der Lampenlast. Die Batterien werden nahezu mit der Energie geladen, die die Lampen verbrauchen würden. Der geladene Zustand dann von einer Batterieüberwachungsschaltung 36 festgestellt und über die Steuerlogik 10 mittels einer Leuchtdiode LED angezeigt.

Die Leuchtdiodenanzeige gestattet es dem Fahrer, in jeder Betriebsphase den Zustand der Lichtanlage zu erkennen. Die Anzeige erfolgt zum Beispiel wie folgt:

Die Diode leuchtet dauernd, wenn das Licht eingeschaltet ist und die Batteriekapazität zwischen etwa 30 % und 90 %.

Die Diode blinkt im 1 Hz-Takt, wenn beim Fahren mit Licht die Batteriekapazität unter etwa 30 % sinkt.

Die Diode blinkt im 4 Hz-Takt, wenn das Licht ausgeschaltet ist, und die Batterien geladen werden, bis eine Batteriekapazität von etwa 90 % erreicht ist.

Ist die Batteriekapazität über 90 % so wird die LED-Anzeige inaktiv.

Die Batterieüberwachungsschaltung 36 hat ferner die Funktion einer Batterieanwesenheitskontrolle. Ist die Batterie 8 nicht vorhanden oder tiefentladen, so wird dies über eine Anwesenheits-Kontrollogik festgestellt und in der Steuerlogik 10 gespeichert. In diesem Falle bleibt die beschriebene Elektronik inaktiv. Ueber ein Relais R₁, r₁ werden dann die Lampen V_{L}, R_{L} direkt an den Dynamo G angeschlossen (Fig. 4). Der Batterie-Ladewandler arbeitet in diesem Fall in der Betriebsart B, d.h. er erzeugt einen kleinen Ladestrom. Es wird damit einerseits ein Tiefentladeschutz für die Batterie 8 und andererseits eine Sicherstellung des Fahrens mit Licht erreicht.

Die Steuerlogik ist mittels Taste 2 betätigbar. Mit einer längeren Tasterbetätigung (grösser als z.B. 0.25 sec) kann der Speicher in der Steuerlogik 10 auf "Ein" gesetzt werden, womit die Lichtanlage über die Steuerlogik 10 eingeschaltet wird. Mit kurzer Tasterbestätigung (weniger als 0.25 sec) wird der Speicher auf "Aus" gesetzt und die Anlage ausgeschaltet. Ferner ist mit der Steuerlogik 10 ein Standlicht-Zeitgeber 13 verbunden, dessen Funktion noch erläutert wird.

Ein Vorteil der beschriebenen Ausführung mit Batterieunterstützung Liegt in der Standlichterzeugung. Wird das Fahrrad angehalten und sinkt damit die Ausgangsspannung des Dynamos G auf Null, so tritt, gemäss der vorstehenden Beschreibung, der Betriebszustand mit Batteriespeisung bei auf 3.2 V stabilisierter Spannung ein. Das Licht brennt also bei reduziertem Verbrauch weiter, sofern es eingeschaltet ist. Unterschreitet die Dynamospannung einen Minimalwert Vo (von z.B. 1 V), wird dies im Schwellenwertschalter 6 festgestellt und ein Signal für die Steuerlogik 10 erzeugt. Diese ist mit einer Timer-Schaltung 13 verbunden, welche in diesem Moment startet und während einer bestimmten Zeit T (von z.B. 4 min) zählt. Während dieser Zeit bleibt der Schaltregler 1' eingeschaltet und das Licht brennt weiter. Ist diese Zeit abgelaufen, so schaltet die Steuerlogik den Schaltregler 1' aus und das Licht wird gelöscht, obschon der Ein/Aus-Speicher 12 noch auf EIN steht. Erzeugt der Dynamo wiederum eine Spannung, welche Vo (= 1 V) übersteigt, oder wird der Taster länger als 0.3 sec betätigt, so wird die Timer-Schaltung 13 zurückgesetzt, und der Schaltregler 1' wieder eingeschaltet, so dass das Licht wieder bei 3.2 V stabilisiert brennt. Mit dieser Aus- und Einschaltautomatik kann ein Standlichbetrieb ohne allzu grossen Batterieverbrauch und ohne besondere Handhabung durch den Benutzer gewährleistet werden.

In Figur 8 sind die beschriebenen Betriebszustände in mehreren zusammengehörenden Diagrammen zu einem beliebigen Fahrprofil schematisch zusammengefasst.

Wie sich aus dieser Darstellung ergibt, ist die Fahrradlichtanlage so ausgestaltet, dass sowohl verbraucherseitig als auch speiseseitig während des gesamten Fahrzyklus zwischen verschiedenen Betriebszuständen umgeschaltet wird, von denen jeder der jeweiligen Betriebssituation optimal angepasst ist. Damit kann gewährleistet werden, dass bei normalen Fahrzyklen immer gutes Licht zur Verfügung steht, die Batterien immer geladen sind und der Fahrwiderstand begrenzt bleibt.

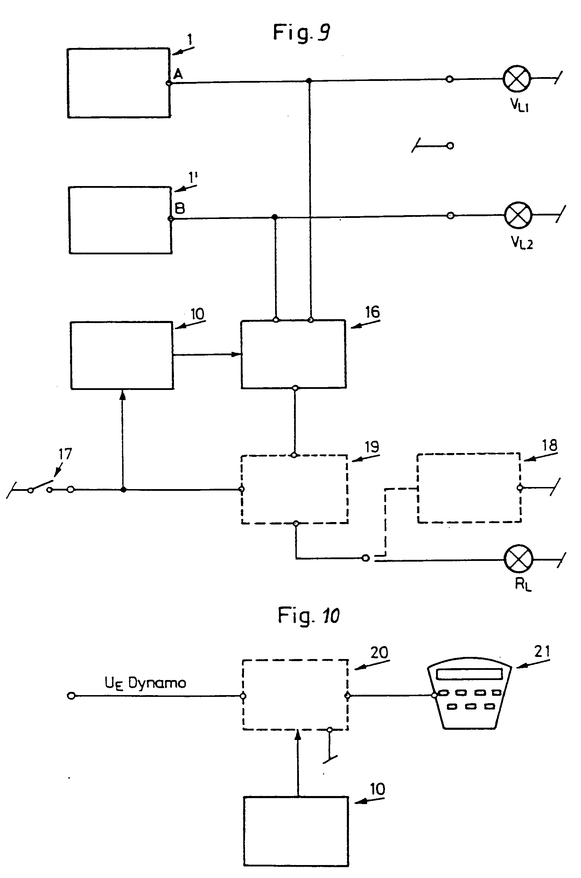

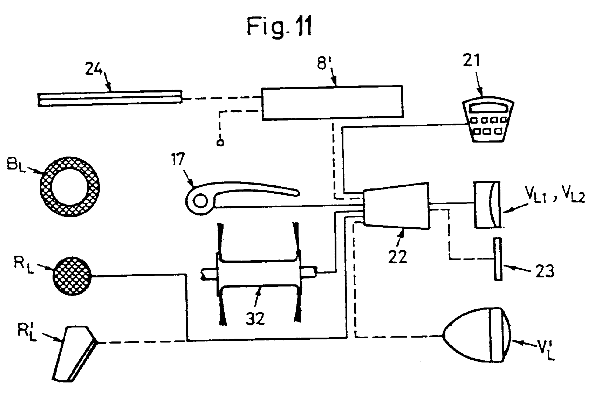

Nachdem bisher Anlagen beschrieben wurden, bei denen alternativ nur auf der Verbraucherseite oder auf der Speiseseite zwischen unterschiedlichen Betriebszuständen umgeschaltet wurde, was entweder die Verwendung mit herkömmlichen Dynamos oder mit herkömmlichen Lampen erlaubt, wird in Fig. 9 eine Anlage gezeigt, bei welcher sowohl auf Speisungs- als auch auf Verbraucherseite entsprechend zwischen den Betriebszuständen umgeschaltet wird. Es kann dabei weitgehend auf die vorstehende Beschreibung verwiesen werden, wobei jeder Schaltregler 1, bzw. 1', mit einer eigenen Lampe (bzw. Wendel) V_{L1}, bzw. V_{L2} der Vorderleuchte verbunden ist. Dabei werden für die Vorderleuchte mit Vorteil Halogenlampem mit zwei Wendeln unterschiedlicher Nennleistung eingesetzt. Für das Rücklicht R_{L} ist weiterhin ein Umschalter 16 vorgesehen, welcher den jeweils aktiven Schaltregler an das Rücklicht anschliesst. Im übrigen arbeitet diese Anlage wie vorstehend beschrieben mit dem Unterschied, dass beim Umschalten zwischen den beiden Schaltreglern ein Spannungssprung von 3.6 V auf ca. 4.5 V erfolgt, da der Lichtwert der Lampe V_{L1} (3.6 / 1.2 W) etwa demjenigen der Lampe V_{L2} (6 V / 2.5 W) bei 4.5 V Betriebsspannung entspricht. Damit ist beim Umschalten zwischen den beiden Lampen (bzw. Wendeln) kein Helligkeitsunterschied wahrnehmbar. In Fig. 9 ist ferner eine Bremslichtfunktion angedeutet, die zum Rücklicht R_{L} hinzukommen kann. Dazu ist einerseits ein Bremskontakt 17 im Bereich der Bremsen und anderseits ein LED-Rücklicht 18 mit zwei Segmenten vorgesehen (vergl. Fig. 11). Das eine Segment dient als Rücklicht bei Nacht und das andere als Bremslicht. Beide werden über denselben Draht gespeist, wobei die Uebertragung des Bremslichtes mittels einer Zusatzelektronik 19 moduliert und im Bremslicht decodiert wird. Damit kann über die gleiche Speisung wahlweise das Rücklicht und/oder das Bremslicht betätigt werden. Die Kompatibilität mit normalem Rücklicht ist dabei gewährleistet.

Schliesslich zeigt Fig. 10 als weitere Option eine Steuerschaltung 20 für eine Anzeige- und Betätigungseinheit 21, welche an die Steuerlogik 10 angeschlossen ist. Aus der gemessenen Dynamo-Spannung U_{E} kann auf die Fahrgeschwindigkeit geschlossen werden, woraus durch Zeitmessung die zurückgelegte Distanz etc. errechnet und angezeigt werden kann.

Die bisher beschriebene Fahrradlichtanlage kann mit herkömmlichen Dynamos G betrieben werden.

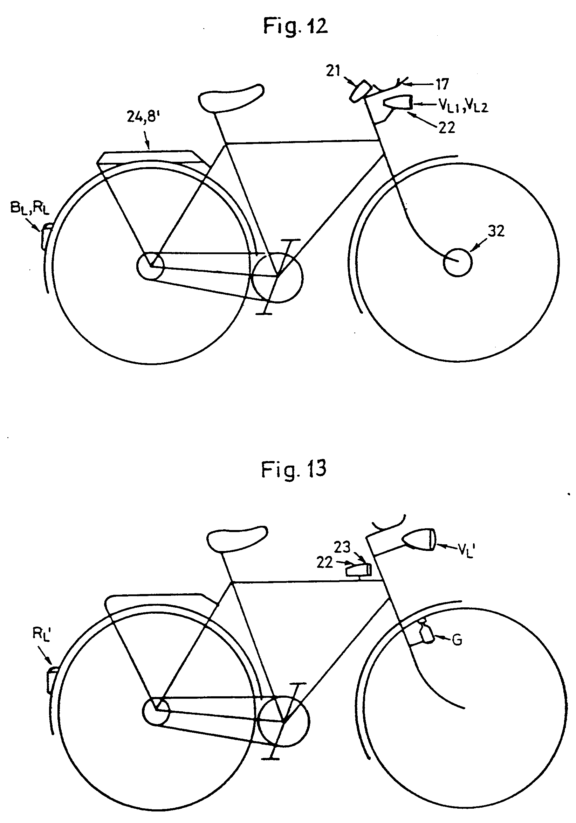

Die beschriebene Fahrradlichtanlage ist aus mehreren Komponenten zusammengesetzt, welche je nach Ausbaustand der Anlage teilweise durch herkömmliche Komponenten ersetzt werden können. In Fig. 11 ist die Anlage übersichtsmässig mit ihren Komponenten gezeigt. Die Figuren 12 und 13 zeigen entsprechend ausgerüstete Fahrräder. Kernstück der Anlage ist ein Elektronikgehäuse 22, das die beschriebene Elektronik in den möglichen Ausbaustufen enthält. Das Elektronikgehäuse 22 dient vorzugsweise auch als Lampengehäuse für die Vorderleuchte, falls diese mit zwei Halogenlampen V_{L1}, V_{L2} (bzw. einer Lampe mit zwei Wendeln) ausgerüstet ist. Wird die Elektronik mit einer herkömmlichen Vorderleuchte V_{L}' betrieben, so kann statt des Leuchtenteils ein Deckel 23 am Gehäuse 22 angeordnet werden. Dieses wird dann an geeigneter Stelle am Fahrradrahmen befestigt (Fig. 13). Ferner ist eine separate Anzeigeeinheit 21 vorgesehen, welche im Gesichtsfeld des Fahrers angeordnet ist (Fig. 12) und die beschriebenen LED-Anzeigen und Schalter 11 aufweist. Die wiederaufladbaren Batterien 8 sind in der Regel im Elektronikgehäuse 22 untergebracht. Falls eine Zusatzbatterie 8', bzw. Sonnenzellen 24 verwendet werden, können diese im Bereich des Gepäckträgers angeordnet sein (Fig. 12). Die Elektronik ist an einen Dynamo G angeschlossen, der z.B. ein Radnabendynamo sein kann. Wird ein LED-Rücklicht R_{L} mit Bremslicht B_{L} verwendet, so ist die Bremse entsprechend mit einem Taster 17 für das Bremslicht ausgerüstet, der wie beschrieben mit der Elektronik 22 verbunden ist. Es kann jedoch auch ein herkömmliches Rücklicht R_{L}' eingesetzt werden.

In Figur 12 ist ein Fahrrad gezeigt, das mit einer voll ausgebauten Fahrradlichtanlage mit Nabendynamo 32, Elektronik 22 mit angebauten Halogenlampen V_{L1}, V_{L2}, Anzeigeeinheit 21, LED-Rücklicht R_{L} mit Bremslicht B_{L} und Sonnenzelllen 24 vorgesehen ist. Die Elektronik entspricht derjenigen von Fig. 6.

Figur 13 zeigt dagegen die Fahrradlichtanlage in Kombination mit herkömmlicher Vorderleuchte V_{L}', herkömmlichen Dynamos G und herkömmlichem Rücklicht R_{L.} Die Elektronik entspricht dabei derjenigen von Figur 4.

Wie sich aus der vorstehenden Beschreibung ergibt, gestattet die Fahrradlichtanlage einen sparsamen, die zur Verfügung stehende elektrische Leistung optimal ausnützenden Betrieb, der in allen Fahrzyklen des Fahrrades eine vorschriftsgemässe, optimale Lichterzeugung sicherstellt. Sie kann in verschiedenen Ausbaustufen in bereits bestehende Fahrradlichtanlagen integriert werden.

## Patentansprüche

1. Fahrradlichtanlage mit einem Stromkreis, der mindestens eine Vorderleuchte, eine Rückleuchte, mindestens eine wiederaufladbare Batterie und einen durch das Fahrrad antreibbaren Dynamo aufweist, dadurch gekennzeichnet, dass sie einen Ladewandler (9) zum Laden der wiederaufladbaren Batterie (8) und eine Steuerschaltung (10) aufweist, wobei die Steuerschaltung (10) und der Ladewandler (9) so ausgestaltet sind, dass abhängig von der vom Dynamo (G) abgegebenen Dynamospannung
- bei niederer Dynamospannung in einem ersten Betriebsbereich (A) die Leuchten von der Batterie (8) gespeist werden und die anfallende Dynamoenergie im wesentlichen der Batterie (8) zugeführt wird,
- bei mittlerer Dynamospannung in einem zweiten Betriebsbereich (B) ein überwiegender Teil der Dynamoenergie den Leuchten und ein kleiner Teil der Dynamoenergie der Batterie (8) zugeführt wird, und
- bei hoher Dynamospannung bei Erreichen bzw. Ueberschreiten eines Spannungsnennwertes der Leuchten in einem dritten Betriebsbereich (C) die Spannung der Leuchten mittels eines Schaltreglers auf den Nennwert stabilisiert und die restliche Dynamoenergie im wesentlichen der Batterie (8) zugeführt wird.

2. Fahrradlichtanlage nach Anspruch 1, dadurch gekennzeichnet, dass bei ausgeschalteten Leuchten alle Dynamoenergie der Batterie (8) zugeführt wird.

3. Fahrradlichtanlage nach einem der vorangehenden Ansprüche, dadurch gekennzeichnet, dass sie einen Schwellenwertschalter (6) zur Bestimmung der vom Dynamo (G) abgegebenen Spannung und des Betriebsbereichs aufweist.

4. Fahrradlichtanlage nach Anspruch 3, dadurch gekennzeichnet, dass der Schwellenwertschalter (6) so ausgestaltet ist, dass er eine Hysterese aufweist, so dass der Uebergang zwischen dem ersten und dem zweiten Betriebsbereich bei einer etwas höheren Spannung (Vₓ₁) erfolgt als der Uebergang (Vₓ₂) vom zweiten in den ersten Betriebsbereich.

5. Fahrradlichtanlage nach einem der vorangehenden Ansprüche, dadurch gekennzeichnet, dass zwei Schaltregler vorgesehen sind, wobei der erste die vom Dynamo (G) gelieferte Spannung auf eine vorgegebene höhere und der zweite die von den Batterien gelieferte Spannung auf eine vorgegebene tiefere Leuchtenspannung stabilisiert.

6. Fahrradlichtanlage nach einem der vorangehenden Ansprüche, dadurch gekennzeichnet, dass sie so ausgebildet ist, dass bei Unterschreitung einer vorgegebenen Minimalspannung des Dynamos (G) die Leuchten abgeschaltet werden.

7. Fahrradlichtanlage nach einem der Ansprüche 1 bis 6, dadurch gekennzeichnet, dass sie so ausgebildet ist, dass jeweils bei Unterschreitung einer vorgegebenen Minimalspannung des Dynamos (G) ein Zeitgeber (13) gestartet wird und die Leuchten nach Ablauf eines vorbestimmten Zeitintervalls abgeschaltet werden.

8. Fahrradlichtanlage nach einem der vorangehenden Ansprüche, dadurch gekennzeichnet, dass die Vorderleuchte zwei Lampen (V_{L1}, V_{L2}) oder eine Lampe mit mindestens zwei Wendeln mit unterschiedlicher Nennspannung besitzt, wobei je nach Spannung vom Dynamo (G) eine der beiden Lampen bzw. Wendeln in Betrieb ist.

9. Fahrradlichtanlage nach einem der vorangehenden Ansprüche, dadurch gekennzeichnet, dass die Batterie, der Ladewandler (9), die Steuerschaltung (10) und die weiteren, zur Leuchtenansteuerung benötigten elektronischen Komponenten zu einer Baueinheit zusammengefasst sind, die mit einer Vorderleuchte und einer Rückleuchte kombinierbar ist.

10. Fahrradlichtanlage nach einem der vorangehenden Ansprüche, dadurch gekennzeichnet, dass die Rückleuchte (R_{L}) mit einem Bremslicht (B_{L}) kombiniert ist, wobei beim Schliessen eines Bremskontakts (18) die Speisung der Rückleuchte mittels einer Modulationsschaltung (19) modulierbar ist, derart, dass beim Auftreten des modulierten Signals das Bremslicht betätigt ist, wobei die Bremslichtspeisung stets durch die Batterie erfolgt.

## Claims

1. Bicycle light plant with an electric circuit comprising at least one front light, a rear light, at least one rechargeable battery and a dynamo drivable by the bicycle, characterized in that the bicycle light plant comprises a charging converter (9) for charging the rechargeable battery (8) and a control circuit (10), wherein the control circuit (10) and the charging converter (9) are designed such that in dependence of the voltage supplied by the dynamo (G)
- at low dynamo voltage in a first range of operation (A) the lights are fed by the battery (8) and the energy supplied by the dynamo is substantially fed to the battery (8),
- at intermediate dynamo voltage in a second range of operation (B) a preponderant part of the dynamo energy is fed to the lights and a small part of the dynamo energy is fed to the battery (8), and
- at high dynamo voltage upon reaching or exceeding a nominal voltage of the lights in a third range of operation (C) the voltage of the lights is stabilized at the nominal voltage by means of a switching regulator and the remaining dynamo energy is substantially fed to the battery (8).

2. Bicycle light plant of claim 1, characterized in that when the lights are switched off all dynamo energy is fed to the battery (8).

3. Bicycle light plant of one of the preceding claims, characterized in that it comprises a threshold switch (6) for determining the voltage supplied by the dynamo (G) and the range of operation.

4. Bicycle light plant of claim 3, characterized in that the threshold switch (6) is designed such that it has a hysteresis, such that the transition between the first and the second range of operation occurs at a somewhat higher voltage (Vₓ₁) than the transition (Vₓ₂) from the second to the first range of operation.

5. Bicycle light plant of one of the preceding claims, characterized in that two switching regulators are provided, wherein the first stabilizes the voltage supplied by the dynamo (G) at a predefined higher light voltage and the second the voltage supplied by the batteries at a predefined lower light voltage.

6. Bicycle light plant of one of the preceding claims, characterized in that it is designed such that upon falling below a given minimum voltage of the dynamo (G) the lights are switched off.

7. Bicycle light plant of one of the claims 1 to 6, characterized in that it is designed such that each time upon falling below a given minimum voltage of the dynamo (G) a timer (13) is started and the lights are switched off after expiration of a predefined time interval.

8. Bicycle light plant of one of the preceding claims, characterized in that the front light possesses two lamps (V_{L1} V_{L2}) or one lamp with at least two coils with differing nominal voltages, wherein depending on the voltage from the dynamo (G) one of the two lamps or coils, respectively, is in operation.

9. Bicycle light plant of one of the preceding claims, characterized in that the battery, the charging converter (9), the control circuit (10) and the additional electronic components required for driving the lights are assembled in a unit that can be combined with a front light and a rear light.

10. Bicycle light plant of one of the preceding claims, characterized in that the rear light (R_{L}) is combined with a stop light (B_{L}) wherein upon closing of a brake contact (18) the supply of the rear light is modulatable by means of a modulation circuit (19) such that upon occurrence of the modulated signal the stop light is operated, wherein the stop light supply always occurs through the battery.

## Revendications

1. Dispositif d'éclairage pour bicyclette avec un circuit électrique, au moins un phare, un feu arrière, au moins une batterie rechargeable, et une dynamo pouvant être actionnée par la bicyclette, caractérisé en ce qu'il comporte un convertisseur d'alimentation (9) pour charger la batterie rechargeable (8), et un circuit de commande (10), ce circuit ainsi que le convertisseur d'alimentation (9) étant agencés de manière à créer, en fonction de la tension délivrée par la dynamo (G), les modes de fonctionnement suivants :
- lorsque la tension délivrée par la dynamo est basse, un premier mode (A) en lequel l'éclairage est aiimenté par la batterie (8), l'énergie délivrée par la dynamo étant essentiellement délivrée à la batterie (8),
- lorsque la tension délivrée par la batterie est moyenne, un second mode (B) en lequel la majeure partie de l'énergie de la dynamo sert à alimenter l'éclairage, une petite partie de cette énergie étant délivrée à la batterie (8), et
- lorsque la tension délivrée par la batterie est grande et qu'elle atteint ou excède la tension nominale des lampes, un troisième mode (C) en lequel la tension appliquée aux lampes est stabilisée à une valeur de consigne au moyen d'un circuit régulateur, l'énergie restante de la dynamo étant principalement délivrée à la batterie (8).

2. Dispositif selon la revendication 1, caractérisé en ce que lorsque les lampes sont éteintes, toute l'énergie de la dynamo est amenée à la batterie (8).

3. Dispositif selon une des revendications précédentes, caractérisé en ce qu'il comporte un interrupteur à seuil (6) pour déterminer la valeur (G) de la tension délivrée par la dynamo et celle du mode de fonctionnement.

4. Dispositif selon la revendication 3, caractérisé en ce que l'interrupteur à seuil (6) est agencé de manière à présenter une hystérése telle que le passage du premier mode au second s'effectue à une tension (V_{x 1}) légèrement supérieure à celle (Vₓ₂) à laquelle a lieu le passage du second mode au premier.

5. Dispositif selon une des revendications précédentes, caractérisé en ce qu'il comprend deux circuits régulateurs dont le premier stabilise la tension (G) d'éclairage délivrée par la dynamo à une valeur supérieure déterminée, tandis que le second stabilise la tension délivrée par la batterie à une valeur déterminée plus faible.

6. Dispositif selon une des revendications précédentes, caractérisé en ce qu'il est agencé de façon à déconnecter l'éclairage lorsque la tension de la dynamo (G) est inférieure à une valeur minimale déterminée.

7. Dispositif selon une des revendications 1 à 6, caractérisé en ce qu'il est agencé de façon à ce qu'une minuterie (13) est mise en route lorsque la tension de la dynamo (G) tombe en-dessous d'une tension minimale prédéterminée et que l'éclairage est déconnecté après un laps de temps prédéterminé.

8. Dispositif selon une des revendications précédentes, caractérisé en ce que le phare comporte deux lampes (V_{L1}, V_{L2}), ou une lampe avec au moins deux filaments, ayant des tensions de consigne différentes, l'une ou l'autre des lampes, respectivement des filaments, étant allumée en fonction de la tension de la dynamo (G).

9. Dispositif selon une des revendications précédentes, caractérisé en ce que la batterie, le convertisseur d'alimentation (9), le circuit de commande (10), ainsi que les autres composants électriques nécessaires pour commander l'éclairage sont réunis en une unité pouvant être combinée avec un phare ou un feu arrière.

10. Dispositif selon une des revendications précédentes, caractérisé en ce que le feu arrière (R_{L}) est combiné avec une lampe (B_{L}) indiquant le freinage, l'alimentation du feu arrière pouvant être modulée lors de la fermeture d'un contact de freinage (18) au moyen d'un circuit modulateur (19) de manière à allumer le feu de freinage lorsque le signal de modulation apparaît, le feu de freinage étant toujours alimenté par la batterie.
